# EUROPÄISCHE PATENTANMELDUNG

(11) **EP 0 672 392 A1**
(43) Veröffentlichungstag der Anmeldung: **20.09.1995**
(21) Anmeldenummer: 94810163.9
(22) Anmeldetag: 17.03.1994
(51) Int. Cl.: A61C 13/30

(54) **Verfahren zur Herstellung eines Verankerungselementes für die Zahnprothetik und ausbrennbarer Kunststoff-Stift zur Ausführung des Verfahrens**

(71) Anmelder: Wiehl, Peter, CH-4303 Kaiseraugst (CH)
(72) Erfinder: Wiehl, Peter, CH-4303 Kaiseraugst (CH)
(74) Vertreter: AMMANN PATENTANWAELTE AG BERN

(57) **Zusammenfassung**

Das Verfahren zur Herstellung eines Verankerungselementes für die Zahnprothetik umfasst die folgenden Schritte:
a) Einführen eines normierten ausbrennbaren Kunststoff-Stiftes mit einem Prothesen-Halteelement in einen Wurzelkanal,
b) Einspritzen eines ausbrennbaren, lichthärtenden Kunstharzes in den Mund,
c) Modellieren einer Kappe aus dem Kunstharz um den Kunststoff-Stift und Lichthärten derselben und Herausnehmen des Guss-Modells, und
d) anschliessender Guss des Verankerungselementes.

Das Verfahren zur Herstellung dieses Verankerungselementes ist wesentlich einfacher und kostengünstiger als vorbekannte Verfahren und ergibt zudem ein solideres Element, da das Prothesen-Haltelement einstückig mit dem Verankerungsteil hergestellt ist.

## Beschreibung

Es sind eine Vielzahl von Verfahren zur Herstellung eines Verankerungselementes für die Zahnprothetik bekannt, bei denen ein Metallstift in eine dazu vorbereitete Bohrung im Kiefer, in der Regel in einen Zahnwurzelkanal, eingesetzt wird. Mit diesem Stift wird ansschliessend ein Abdruck genommen, der das Negativ der zahnrestwurzel darstellt. Aufgrund dieses Abdruckes erfolgt im Dental-Labor die Herstellung eines Modells aus Gips oder aus galvanisch abgeschiedenem Kupfer. Dann wird auf dieses Modell eine Wachskappe modelliert, die anschliessend in einem bekannten Gussverfahren der Dentaltechnik in Metall, in der Regel eine Edelmetallegierung, umgesetzt wird. Der bereits bei der Gewinnung des Abdruckes verwendete Edelmetallstift wird dabei von der Kappe umgossen. Zum Schluss wird das gewünschte Prothesen-Halteelement auf die Kappe aufgelötet.

Dieses Herstellungsverfahren ist recht aufwendig und durch das Auflöten des Prothesen-Halteelementes besteht die Gefahr eines Ablösens desselben. Es ist davon ausgehend Aufgabe der vorliegenden Erfindung ein Verfahren anzugeben, das wesentlich einfacher und dadurch auch kostengünstiger wird und zudem ein festeres Verankerungselement ergibt. Diese Aufgabe wird mit dem Verfahren gemäss Patentanspruch 1 gelöst. In einer bevorzugten Ausführung werden die Kosten nochmals dadurch gesenkt, dass anstatt Edelmetall, insbesondere Gold, eine kostengünstigere Legierung aus Nichtedelmetall auf Chrom-Kobaltbasis verwendet wird.

Der ausbrennbare Stift zur Durchführung des Verfahrens zeichnet sich dadurch aus, dass er nebst dem in die Bohrung einzuführenden, passgenauen Verankerungsteil ein Prothesen-Halteelement aufweist, das vorzugsweise eine genormte Kugel ist, auf die bekannte und auf dem Markt erhältliche Prothetikteile fixiert werden können.

Die Erfindung wird im folgenden anhand einer Zeichnung eines Ausführungsbeispiels näher erläutert.
- Fig. 1: zeigt in einer Seitenansicht einen ausbrennbaren Kunststoff-Stift gemäss Erfindung mit Prothesen-Halteelement,
- Fig. 2: zeigt den Kunststoff-Stift mit der daran modellierten Kappe und
- Fig. 3: zeigt, in einer schematischen Darstellungsweise, das fertige Verankerungselement auf der Zahnwurzel.

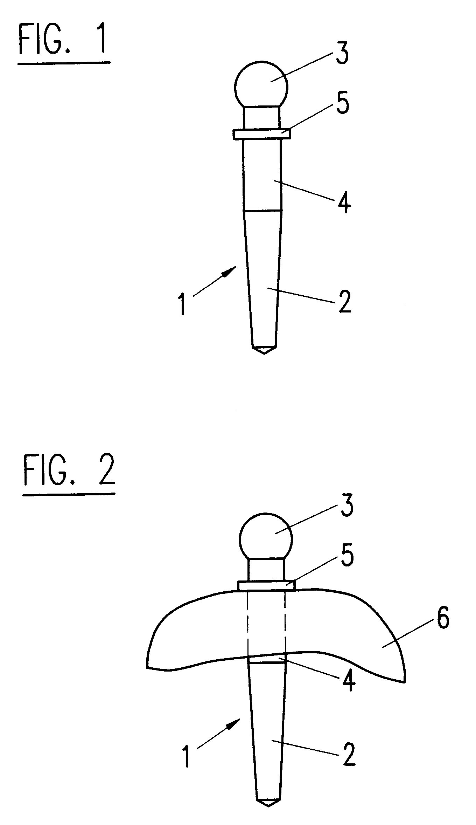

Der Stift 1 in Fig. 1 besteht aus einem ausbrennbaren Kunststoff und weist ein Verankerungsteil 2 und 4 sowie ein Prothesen-Halteelement 3 auf. Im allgemeinen werden die Verankerungselemente im Zahnwurzelkanal verankert und in diesem Falle ist das Verankerungsteil 2 und 4 gleich wie ein Verankerungsteil eines Wurzelkanalankers ausgebildet, beispielsweise wie gemäss EP-B-O 043 343. Die Form des Ankerteils ist jedoch nicht erfindungswesentlich und kann eine beliebig andere, auch an sich bekannte Form aufweisen. Dem zylindrischen Teil 4 schliesst sich ein umlaufender Kragen 5 an, über dem das Prothesen-Halteelement 3 geformt ist, z.B. der Kugelkopf eines bekannten Kugelgelenkes eines Prothetikteiles. Auch im Falle des Halteelementes ist die Erfindung nicht auf diesen Kugelkopf beschränkt und könnte eine beliebige Form aufweisen, die zu einem Prothetikteil passt.

Nach dem Einführen des Kunststoff-Stiftes in den Zahnwurzelkanal und Kontrolle seiner richtigen Stellung wird, beispielsweise mittels einer Spritze, eine zu diesen Zwecken geeignete Kunststoff-Masse, beispielsweise ein unter Lichteinfluss polimerisierendes Kunstharz, eingebracht und eine Kappe modelliert, wie sie mit dem Bezugszeichen 6 in Fig. 2 angedeutet ist.

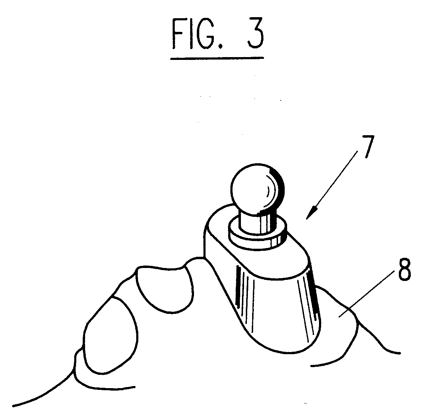

Nach dem Modellieren wird der Stift mitsamt der Kappe mit Hilfe einer dazu geeigneten Lichtquelle gehärtet und aus dem Wurzelkanal herausgezogen. Anschliessend wird nach im Dentalbereich bekannten Verfahren das Verankerungselement gegossen. Dazu können insbesondere nichtedelmetallhaltige Legierungen verwendet werden, beispielsweise eine Chrom-Kobalt-Legierung. In Fig. 3 ist das gegossene Verankerungselement 7 im einzementierten und verankerten Zustand in einem Wurzelkanal im Kiefer 8 angedeutet, wobei ersichtlich ist, dass die gesamte Oeffnung des Zahnwurzelkanals abgedeckt ist, um diese vor Plaque und Karies zu schützen.

Die Metallkappe aus einer Kobalt-Basis-Legierung oder Chrom-Kobalt-Legierung schützt die Zahnwurzel vor dem kariösen Zerfall und verhindert bedeutend besser als eine Goldkappe die Anlagerung von Plaque. Dadurch wird bei eingeschränkter Mundpflege - wie dies oft bei geriatrischen Patienten anzutreffen ist - die Bildung von Karies und die Entzündung des Zahnfleisches (Gingivitis) reduziert.

Wie aus obiger Beschreibung hervorgeht, ist das Verfahren gegenüber vorbekannten Verfahren wesentlich vereinfacht und daher kostengünstiger. Dies ist insbesondere bei der sozialen und geriatrischen Zahnmedizin wichtig, wobei die Verankerungselemente gemäss Erfindung vor allem für Teil-und Hybridprothesen geeignet sind. Ausserdem eignen sich diese Verankerungselemente im Gegensatz zu Zahnwurzelkanal-Schrauben für grosse Zahnwurzelkanäle und überdecken mit der Kappe aus biokompatiblem Material die Wurzeloberfläche, wodurch sich Ueberdeckungen mit Kunststoff oder Amalgam erübrigen. Durch das Giessen von Kappe und Prothesen-Halteelement in einem ist auch eine wesentlich stabilere Konstruktion gewährleistet als nach vorbekannten Verfahren.

## Patentansprüche

1. Verfahren zur Herstellung eines Verankerungselementes für die Zahnprothetik, gekennzeichnet durch die folgenden Schritte:
a) Einführen eines ausbrennbaren Kunststoff-Stiftes in eine Bohrung, insbesondere Zahnwurzelkanal, im Kiefer,
b) Einbringen eines ausbrennbaren Kunstoffes in den Mund,
c) Modellieren einer Kappe aus dem eingebrachten Kunststoff um den Kunststoff-Stift und Herausnehmen des Guss-Modells, und
d) anschliessender Guss des Verankerungselementes.

2. Verfahren nach Anspruch 1, dadurch gekennzeichnet, dass zum Modellieren der Kappe ein lichthärtender Kunstharz verwendet wird und die Kappe um dem Stift vor dem Herausnehmen gehärtet wird.

3. Verfahren nach Anspruch 1 oder 2, dadurch gekennzeichnet, dass zum Giessen des Verankerungslementes eine nichtedelmetallhaltige Legierung, insbesondere eine Chrom-Kobalt-Legierung, verwendet wird.

4. Ausbrennbarer Kunststoff-Stift zur Ausführung des Verfahrens nach Anspruch 1, dadurch gekennzeichnet, dass er ein Verankerungsteil (2) und ein Prothesen-Halteelement (3) aufweist.

5. Stift nach Anspruch 4, dadurch gekennzeichnet, dass das Prothesen-Halteelement (3) ein normierter Kugelkopf ist.

6. Nach dem Verfahren von Anspruch 1 und 3 hergestelltes Verankerungselement (1) mit einer Schutzkappe (6) und einem einstückig mit dem Verankerungsteil (2) gegossenen Prothesen-Halteelement (3) aus nichtedelmetallhaltiger Legierung.
